# EUROPEAN PATENT APPLICATION

(11) **EP 4 814 792 A1**
(43) Date of publication of application: **30.09.2026**
(21) Application number: 26168960.8
(22) Date of filing: 30.03.2026
(51) Int. Cl.: G06N 3/045, G06N 3/084, G06N 3/0464, G06N 3/0475, G06N 3/096

(54) **WORLD MODELS FOR PROCESSING VEHICLE SENSOR DATA**

(30) Priority: 28.03.2025 US 202563780046 P
(71) Applicant: WAYMO LLC, Mountain View, CA 94043 (US)
(72) Inventor: JIANG, Chiyu, Mountain View California, 94043 (US); CHANDRAN, Harish, Mountain View California, 94043 (US)
(74) Representative: Collingwood-Pierce, Alexandra Isobel Seymour

(57) **Abstract**

Systems and methods for using multi-modal token processing neural networks for autonomous driving. One of the methods includes obtaining an input sequence of tokens characterizing a driving environment for a vehicle, wherein the input sequence of tokens comprises, for each of one or more time steps, a respective set of tokens for each of a plurality of modalities of data from a set of multiple modalities of data; and processing the input sequence of tokens using a multi-modal token processing neural network to generate an output sequence of tokens, wherein: the output sequence of tokens characterizes a prediction for a prediction task for the vehicle, wherein: the multi-modal token processing neural network has been trained to process input token sequences characterizing current states of example driving environments to generate output token sequences characterizing predicted future states of the example driving environments.

## Description

### BACKGROUND

This specification relates to processing sensor data characterizing an environment (e.g., a driving environment) for an agent in the environment.

The environment may be a real-world environment, and the agent may be, e.g., a vehicle in the environment.

Processing vehicle sensor data is a task required for motion planning and navigation, e.g., by an autonomous vehicle.

Autonomous vehicles include fully driverless autonomous cars, boats, and aircraft.

Autonomous vehicles use a variety of on-board sensors and computer systems to detect nearby objects and use such detections to make control and navigation decisions, e.g., by predicting the future trajectories of agents in the vicinity of the autonomous vehicles using the detections.

### SUMMARY

This specification generally describes a prediction system implemented as computer programs on one or more computers in one or more locations that can process sensor data characterizing an environment of a vehicle to generate predictions for the vehicle. In particular, the described prediction system can use a multi-modal token processing neural network to process data characterizing a current state of the environment to generate a prediction for a prediction task for the vehicle.

This specification also describes techniques for training the multi-modal token processing neural network. For example, the system can "pre-train" the multi-modal token processing neural network on a next frame prediction objective. The system can then fine-tune the multi-modal token processing neural network to perform a specific prediction task and, in some cases, distill the fine-tuned neural network to generate a neural network for performing the task that is smaller, has lower latency, or both.

The subject matter described in this specification can be implemented in particular embodiments so as to realize one or more of the following advantages.

This specification describes techniques for using a multi-modal token processing neural network that has a unified architecture that can perform many different prediction tasks that are required for autonomous vehicle operations. This allows the same model to learn a rich representation of the driving environment that can transfer knowledge across different types of autonomous driving tasks, e.g., two or more of perception tasks, planning tasks, simulation tasks, or evaluation tasks.

For example, the multi-modal token processing neural network can be pre-trained on a next frame prediction task, allowing the multi-modal token neural network to learn a cohesive understanding of the driving environment, enabling the neural network to make more informed and consistent decisions than a collection of specialized models. As a particular example, because the multi-modal neural network predicts both comms tokens and sensor tokens, the pre-training task is a multi-fidelity (both multi-modal sensor tokens as well as comms tokens) next frame prediction task, which results in a pre-trained neural network that represents a world model of the driving environment, allowing the same neural network to be adapted to multiple different prediction tasks. For example, the same neural network can be adapted to perform multiple different types of autonomous driving tasks, e.g., two or more of perception, planning, simulation or evaluation tasks.

As a particular example, by making use of the described techniques, a single pre-trained neural network can be used to fine-tune and then, optionally, distill multiple different task-specific prediction neural networks for multiple different types of autonomous driving prediction tasks. As a result, each of the task-specific neural networks can achieve improved performance as a result of leveraging information about the driving environment that transfers across task types and that has been learned by the multi-modal token processing neural network as a result of being pre-trained through next token prediction. This results in more effective control of autonomous vehicles.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A illustrates an example vehicle sensor data processing task using an on-board vehicle query processing system.
FIG. 1B illustrates an example vehicle sensor data processing task using an off-board vehicle query processing system.
FIG. 2 shows an example of the operation of the multi-modal token processing neural network.
FIG. 3 shows an example of prediction tasks performed using the multi-modal token processing neural network.
FIG. 4 shows an example of training the multi-modal token processing neural network on a next frame prediction task.
FIG. 5 shows an example of the training of a tokenizer and a de-tokenizer.
FIG. 6 shows an example of the training pipeline for the multi-modal token processing neural network.
FIG. 7 is a flow diagram of an example process for performing a task using the multi-modal token processing neural network.
FIG. 8 is a flow diagram of an example process for training the multi-modal token processing neural network.
FIG. 9 is a flow diagram of an example process for training the multi-modal token processing neural network to perform a prediction task.
FIG. 10 is a flow diagram of an example process for on-device pre-training of the multi-modal token processing neural network.

Like reference numbers and designations in the various drawings indicate like elements.

### DETAILED DESCRIPTION

This specification generally describes a prediction system implemented as computer programs on one or more computers in one or more locations that can process sensor data characterizing an environment of a vehicle to generate predictions for the vehicle. In particular, the described prediction system can use a multi-modal token processing neural network to process data characterizing a current state of the environment to generate a prediction for a prediction task for the vehicle. This specification also describes techniques for training the multi-modal token processing neural network. For example, the multi-modal token processing neural network can be trained on a next frame prediction task that requires generating tokens that predict future states of the environment.

The prediction system and example prediction tasks are described in more detail below.

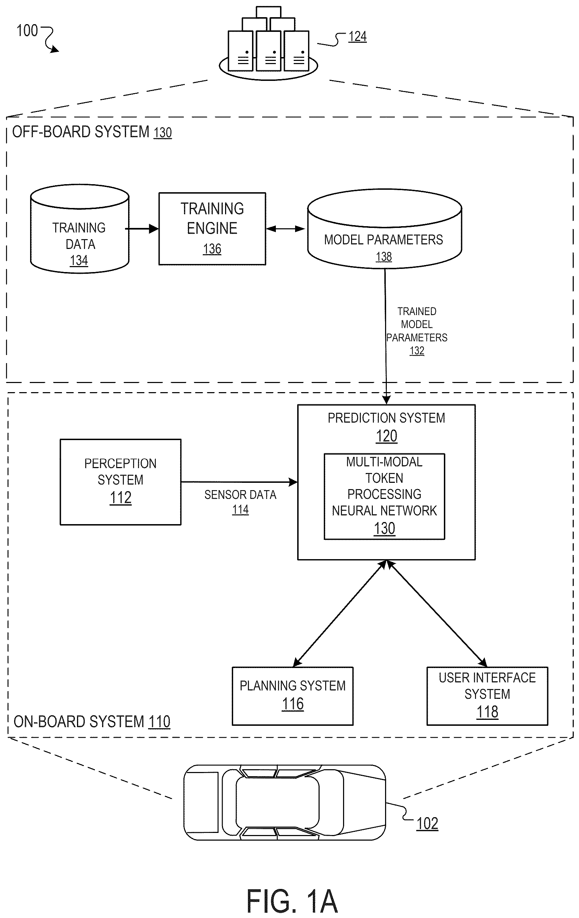

FIG. 1A illustrates an example vehicle sensor data processing task in which an on-board system 110 for a vehicle 102 processes sensor data for the vehicle 102 to generate predictions for the vehicle 102.

The on-board system 110 is located on-board the vehicle 102. The vehicle 102 in FIG. 1A is illustrated as an automobile, but the on-board system 110 can be located on-board any appropriate vehicle type.

In some cases, the vehicle 102 is an autonomous vehicle. An autonomous vehicle can be a fully driverless autonomous vehicle that determines and executes fully-autonomous driving decisions in order to navigate through an environment. An autonomous vehicle can also be a semi-autonomous vehicle that uses predictions to aid a human driver. For example, the vehicle 102 can autonomously apply the brakes if a prediction indicates that a human driver is about to collide with another vehicle. As another example, the vehicle 102 can have an advanced driver assistance system (ADAS) that assists a human driver of the vehicle 102 in driving the vehicle 102 by detecting potentially unsafe situations and alerting the human driver or otherwise responding to the unsafe situation. As a particular example, the vehicle 102 can alert the driver of the vehicle 102 or take an autonomous driving action when an obstacle is detected, when the vehicle departs from a driving lane, or when an object is detected in a blind spot of the human driver.

The on-board system 110 includes a perception system 112 that includes one or more sensors, at least some of which are configured to receive reflections of electromagnetic radiation from the environment in the vicinity of the vehicle 102. For example, the perception system 112 can include one or more laser sensors (e.g., LIDAR laser sensors) that are configured to detect reflections of laser light. As another example, the perception system 112 can include one or more radar sensors that are configured to detect reflections of radio waves. As another example, the perception system 112 can include one or more camera sensors that are configured to detect reflections of visible light.

The sensors of the perception system 112 continually (i.e., at each of multiple time points) capture observations of raw sensor data, which can indicate the directions, intensities, and distances travelled by reflected radiation. For example, a sensor in the perception system 112 can transmit one or more pulses of electromagnetic radiation in a particular direction and can measure the intensity of any reflections as well as the time that the reflection was received. A distance can be computed by determining the time which elapses between transmitting a pulse and receiving its reflection. Each sensor can continually sweep a particular space in angle, azimuth, or both. Sweeping in azimuth, for example, can allow a sensor to detect multiple objects along the same line of sight.

The perception system 112 can generate sensor data 114 that characterizes the observations captured by the sensors of the vehicle 102. The sensor data 114 characterizes a scene in an environment, e.g., an area of the environment that includes the area within a threshold distance of the autonomous vehicle or the area that is within range of at least one sensor of the vehicle.

In some examples, the sensor data 114 includes raw sensor data generated by one or more sensors from the perception system 112. In some examples, the sensor data 114 includes object detection data that has been generated from the outputs of an object detector that processes the observations of raw sensor data from the perception system 112. In some examples, the sensor data 114 includes segmentation data (e.g., image segmentation data, point-cloud segmentation data, etc.) that has been generated by performing segmentation of the observations of raw sensor data.

Generally, the sensor data 114 can include data for any of a plurality of sensor modalities of the perception system 112.

For example, when the perception system 112 includes camera sensors, the sensor data 114 can include observations of image data obtained by the camera sensors of the vehicle 102.

As another example, when the perception system 112 includes LIDAR sensors, the sensor data 114 can include observations of point-cloud data obtained by the LIDAR sensors of the vehicle 102.

As another example, when the perception system 112 includes RADAR sensors, the sensor data can include observations of RADAR data obtained by the RADAR sensors of the vehicle 102.

The on-board system 110 can use a prediction system 120 to generate predictions for the vehicle 102 by processing the sensor data 114 and data from other sub-systems of the vehicle 102 (e.g., a planning system 116 of the vehicle 102, a user interface system 118 of the vehicle, etc.). In particular, the prediction system 120 can include a multi-modal token processing neural network 130 and can process the sensor data 114, data from other sub-systems of the vehicle 102, or both using the multi-modal token processing neural network 130 to generate predictions for the vehicle 102.

The multi-modal token processing neural network 130 can be configured to process an input sequence of tokens characterizing the environment of the vehicle 102 to generate an output token sequence that characterizes a prediction for the vehicle 102. In some implementations, the multi-modal token processing neural network 130 can generate the output token sequence to characterize a predicted future state of the environment of the vehicle 102 and the prediction system 120 can process the output token sequence to generate a prediction for a particular prediction task for the vehicle 102.

The input token sequence can include, for each of one or more time steps, a respective set of tokens for each of a plurality of modalities of data from a set of multiple modalities of data. The set of multiple modalities of data can include any of a variety of data modalities.

In particular, the set of multiple modalities of data can include data modalities for the sensor data 114 and data generated by the other sub-systems of the vehicle 102. For example, the set of multiple modalities of data can include two or more of: a video data modality, an image data modality, an audio data modality, a LIDAR data modality, a RADAR data modality, a road graph data modality, structured data generated by processing sensor data obtained by one or more sensors of the vehicle 102 using the perception system 112 of the vehicle 102, or any appropriate combination thereof.

A token, as used in this specification, can refer to a discrete token or a continuous token. A discrete token is one of a discrete set of tokens in a fixed size token vocabulary of the multi-modal token processing neural network 130. For example, discrete tokens can be represented as one-hot vectors or other identifiers that uniquely identify tokens from the token vocabulary. A continuous token, on the other hand, is a vector of continuous values. For example, a continuous token can have the same dimensionality as an embedding in an embedding space of embeddings of discrete tokens generated by the multi-model token processing neural network 130.

The multi-modal token processing neural network 130 can process input token sequences that include various different subsets of modalities from the set of multiple data modalities, e.g., at different times, as part of performing different processing tasks, and so on.

In some implementations, the multi-modal token processing neural network 130 can generate the output token sequence to include a respective set of tokens for each modality of data from the set of multiple modalities of data.

In some implementations, the prediction system 120 can generate the input token sequence by, for each of the one or more time steps and for each of the plurality of modalities of data: obtaining input data of the modality for the time step (e.g., from another sub-system of the vehicle); and processing the input data of the modality for the time step using an encoder neural network for the modality to generate the set of tokens for the modality for the time step.. Encoders will also be referred to as tokenizers in this specification.

In some implementations, the prediction system 120 can generate output data for each of one or more output modalities of the set of multiple modalities by processing some or all of the output token sequence using a decoder neural network for the modality. For example, for each of the one or more output modalities, the output token sequence can include a respective set of output tokens for the modality and the prediction system 120 can process the respective set of output tokens for the modality using the decoder neural network for the modality to generate the output data of the modality. Decoders will also be referred to as de-tokenizers in this specification.

The prediction system 120 can be configured (e.g., trained) to generate predictions for any of a variety of prediction tasks for the vehicle 102. For example, the prediction task for the vehicle 102 can include processing the sensor data 114 obtained by one or more sensors of the vehicle 102 to generate output data characterizing one or more detected objects in the driving environment of the vehicle 102. As another example, the prediction task for the vehicle 102 can include generating a predicted trajectory for each of one or more agents or vehicles in the driving environment of the vehicle 102. As another example, the prediction task for the vehicle 102 can include generating a planned trajectory for the vehicle 102 through the driving environment of the vehicle 102. As another example, the prediction task for the vehicle 102 can include generating one or more planned control inputs for the vehicle 102. As another example, the prediction task for the vehicle 102 can include generating structured input data for one or more processing systems of the vehicle 102 (e.g., for the planning system 116, for the user interface system 118, etc.). As another example, the prediction task for the vehicle 102 can include generating a text description characterizing the driving environment of the vehicle 102.

The on-board system 110 can provide predictions generated by the prediction system 120 to the other sub-systems of the vehicle (e.g., the planning system 116, the user interface system 118, etc.).

For example, when the planning system 116 receives predictions generated by the prediction system 120, the planning system 116 can use the predictions generated by the prediction system 120 to make fully-autonomous or partly-autonomous driving decisions. For example, the planning system 116 can generate a fully-autonomous plan to navigate the vehicle 102 to avoid a collision with another agent by changing the future trajectory of the vehicle 102 to avoid the predicted future trajectory of the agent. In a particular example, the on-board system 110 can provide the planning system 116 with predictions generated by the prediction system 120 indicating that another vehicle which is attempting to merge onto a roadway being travelled by the vehicle 102 is unlikely to yield to the vehicle 102. In this example, the planning system 116 can generate fully-autonomous control outputs to apply the brakes of the vehicle 102 to avoid a collision with the merging vehicle. The fully-autonomous or partly-autonomous driving decisions generated by the planning system 116 can be implemented by a control system of the vehicle 102. For example, in response to receiving a fully-autonomous driving decision generated by the planning system 116 which indicates that the brakes of the vehicle should be applied, the control system may transmit an electronic signal to a braking control unit of the vehicle. In response to receiving the electronic signal, the braking control unit can mechanically apply the brakes of the vehicle.

As another example, when the user interface system 118 receives predictions generated by the prediction system 120, the user interface system 118 can use the predictions generated by the prediction system 120 to present information to the driver of the vehicle 102 to assist the driver in operating the vehicle 102 safely. The user interface system 118 can present information to the driver of the vehicle 102 by any appropriate means, for example, by an audio message transmitted through a speaker system of the vehicle 102 or by alerts displayed on a visual display system in the vehicle (e.g., an LCD display on the dashboard of the vehicle 102). In a particular example, the on-board system 110 can provide the user interface system 118 with trajectory prediction output indicating that another vehicle which is attempting to merge onto a roadway being travelled by the vehicle 102 is unlikely to yield to the vehicle 102. In this example, the user interface system 118 can present an alert message to the driver of the vehicle 102 with instructions to adjust the trajectory of the vehicle 102 to avoid a collision with the merging vehicle.

Prior to the on-board system 110 using the prediction system 120 to make predictions, a training system 130 can determine trained model parameters 132 for the prediction system 120. In particular, the training system 130 can determine trained model parameters 132 for the multi-modal token processing neural network 130 of the processing system 120.

The training system 130 is typically hosted within a data center 124, which can be a distributed computing system having hundreds or thousands of computers in one or more locations.

The training system 130 can train the multi-modal token processing neural network 130 using training data 134 of the system 130. The training data 134 generally includes example data characterizing example environments for example vehicles. The training data 134 can be obtained from real or simulated driving data logs. For example, the real driving data can include data from autonomous vehicles, human-driven vehicles, remotely-operated vehicles, or some combination of the above.

As an example, the training data 134 can include example data for the one or more sensor data modalities (e.g., images, point-clouds, etc.) representing raw sensor data. The training data 134 can include example task data characterizing example prediction tasks for the training data 134.

The training engine 136 trains the multi-modal token processing neural network 130 to update model parameters 138 by optimizing an objective function based on target predictions for the training data 134, e.g., an objective function that measures a similarity between output predictions generated by the prediction system 120 and corresponding target predictions.

In some implementations, the training engine 136 can train the multi-modal token processing neural network 130 to process input token sequences characterizing current states of example driving environments to generate output token sequences characterizing predicted future states of the example driving environments.

In some implementations, as part of training the multi-modal token processing neural network 130, the training engine 136 can train the multi-modal token processing neural network 130 to optimize an objective function that measures an error between (i) the predicted future states of the example driving environments characterized by the output token sequences and (ii) corresponding target future states of the example driving environments. This objective will also be referred to as a next frame prediction objective.

In some implementations, as part of training the multi-modal token processing neural network 130, the training engine 136 can train the multi-modal token processing neural network 130 to optimize an objective function that measures an error between (i) the current states of the example driving environments characterized by the input token sequences and (ii) reconstructions of the current states generated by processing the corresponding output token sequences generated by the multi-modal token processing neural network 130. This objective will also be referred to as a current frame reconstruction objective.

As will be described in more detail below, in some implementations, the training engine 136 can train the multi-modal token processing neural network 130 on two or more of the above objectives as part of the pre-training.

In some implementations, after training the multi-modal token processing neural network 130 to process the input token sequences characterizing current states of the example driving environments to generate the output token sequences characterizing predicted future states of the example driving environments, the training engine 136 can train (e.g., fine-tune) the multi-modal token processing neural network 130 using an objective function for a prediction task for the vehicle.

In some implementations, the training engine 136 can train the multi-modal token processing neural network 130 as a distillation of another neural network.

In some implementations, the training engine 136 can jointly train the multi-modal token processing neural network 130 with encoder neural networks, decoder neural networks, or both, for one or more of the set of multiple data modalities for the network.

After training any of the above neural networks, the training system 130 can send the trained model parameters 132 to the prediction system 120, e.g., through a wired or wireless connection.

In some implementations, the on-board system 110 can transmit outputs generated by the prediction system 120 to the off-board system 130. The off-board system 130 can use such transmitted outputs to train another neural network. As a particular example, the off-board system 130 can use outputs transmitted from the prediction system 120 of the vehicle 102 (and outputs transmitted from prediction systems of other vehicles) to train neural networks for a federated prediction system.

In some implementations, the driving environment can be a simulated driving environment and the vehicle 102 can be a simulated vehicle navigating the simulated driving environment. The simulated driving environment can represent a real-world driving environment and the prediction system 120 can generate predictions for simulating the real-world driving environment. For example, the prediction system 120 can receive input data specifying a simulated scenario for the vehicle 102 and can generate predictions for the simulated driving scenario, such as trajectories for objects in the simulated scenario, sensor data for the vehicle 102 in the simulated scenario, and so on.

While this specification describes processing sensor data and generating predictions on-board an autonomous vehicle, more generally, the described techniques can be implemented on any system of one or more computers that receives images of scenes in an environment. That is, once the training system 130 has trained the prediction system 120, the prediction system 120 can be used by any system of one or more computers.

As one example, the prediction system 120 can be a part of an on-board system 110 for a different type of agent that has sensors and that interacts with objects as it navigates through an environment. For example, the prediction system 120 can process sensor data and generate predictions for a robot or other agent.

As another example, the prediction system 120 can be a part of an off-board system 130 that is remote from the agent and that receives data generated by sensors and navigation systems (e.g., planning systems) of the agent. When the prediction system 120 is part of an off-board system 130, the off-board system 130 can generate responses to queries for the agent (e.g., queries transmitted to the off-board system by the on-board system 110 for the agent) and can transmit the generated responses to the on-board system 110. The on-board system 110 can process the responses transmitted by the off-board system 130 to control the agent.

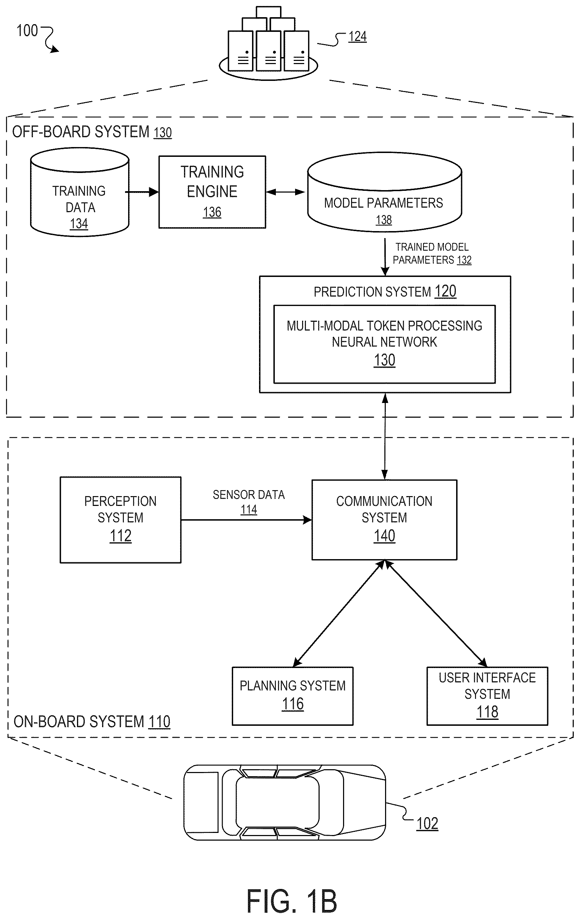

FIG. 1B illustrates an example vehicle sensor data processing task in which the off-board system 130 includes the prediction system 120 and processes sensor data for the vehicle 102 to generate predictions for the vehicle 102.

As illustrated in FIG. 1B, the prediction system 120 can be located on one or more computers that are remote from the vehicle 102 (e.g., within the data center 124) and can receive data as transmitted by the vehicle 102, e.g., as transmitted by a communication system 140 of the vehicle 102. The prediction system 120 can process, e.g., sensor data 114 obtained by the perception system 112, data generated by the planning system 116, user inputs obtained by the user interface system 118, and so on, transmitted by the communication system 140 of the vehicle 102 to the system 120 in order to generate a prediction for the vehicle 102. The system 120 can then transmit the generated prediction to the vehicle 102, e.g., for use in performing fully-autonomous or semi-autonomous driving tasks.

As an example, the prediction system 120 can monitor data transmitted by the vehicle 102 and detect potentially unsafe situations. When the prediction system 120 detects an unsafe situation, the system 120 can transmit data to an ADAS system of the vehicle 102 that can then alert a human driver of the vehicle. As another example, the prediction system 120 can process sensor data and task data for a navigation task transmitted by the vehicle 102 and can transmit the planned trajectory to the vehicle 102 for use in navigation planning by sub-systems (e.g., the planning system 116) of the vehicle 102.

When the prediction system 120 is located on one or more computers that are remote from the vehicle 102, the system 120 can receive and process data generated by sources other than sensors and systems of the vehicle 102 as part of generating predictions for the vehicle 102. For example, the prediction system 120 can receive and process sensor data obtained by sensors outside the vehicle 102 that are observing the driving environment of the vehicle 102. As another example, the prediction system 120 can receive and process sensor data and navigation data transmitted to the system 120 by other vehicles in the driving environment of the vehicle 102. By processing data from sources other than systems of the vehicle 102, the prediction system 120 can transmit information to the vehicle 102 that may otherwise be unavailable to the vehicle 102. As a further example, if a portion of the driving environment is obstructed from the view of sensors on-board the vehicle 102, the prediction system 120 can transmit predictions to the vehicle 102 that can provide information to the vehicle 102 about the obstructed portion of the driving environment.

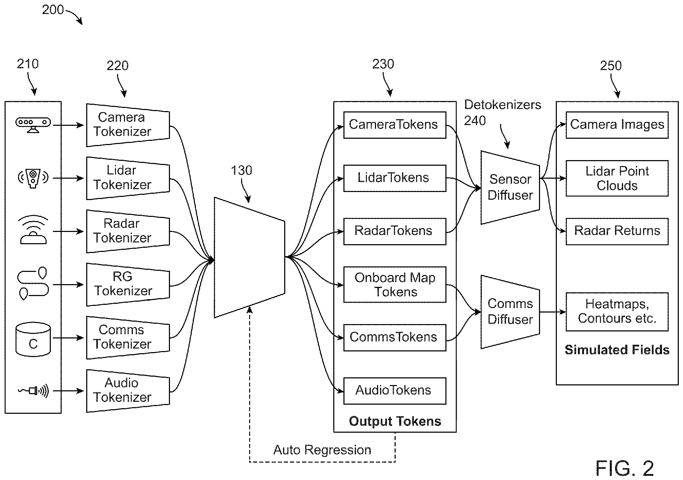

FIG. 2 shows an example 200 of the multi-modal token processing neural network 130.

As described above, the multi-modal token processing neural network 130 is configured to process an input sequence of tokens that represent multi-modal data 210, i.e., data of multiple different modalities.

In the example 200, the multi-modal data 210 includes camera data, lidar data, radar data, roadgraph data, "comms" data, and audio data.

For example, the camera data can include images, videos, or both captured by one or more camera sensors of an autonomous vehicle.

The lidar data can include point clouds, range images, or both generated from readings by one or more Lidar sensors of the autonomous vehicle.

The radar data can include radar scans generated from readings by one or more radar sensors of the autonomous vehicle.

The audio data can include audio signals, e.g., waveforms or spectrograms or other audio representations, generated from signals captured by one or more microphone sensors of the autonomous vehicle.

Roadgraph data refers to data representing features of a map of roadways and associated structures, e.g., traffic signals, street signs, and other static structures, in the driving environment. That is, the roadgraph data identifies road features in the driving environment, e.g., driving lanes, intersections, traffic signals, street signs, and so on. For example, the roadgraph data can be represented as a top-down image of the environment that demarks the road features, as vectors that contain data about the corresponding road features, or using another appropriate representation.

In this specification, "comms" data refers to structured data generated by processing sensor data obtained by one or more sensors of the vehicle using a perception system of the vehicle. Examples of this type of data include perception outputs generated by perception models, e.g., locations, motion parameters, types, and other information about agents or other objects in the environment, previous locations of the autonomous vehicle, and so on.

The modalities can also include additional modalities that are not shown in FIG. 2. For example, the modalities can include a text modality that allows the multi-modal neural network 130 to process text tokens representing, e.g., text queries, natural language instructions, system prompts, and so on.

In the example 200, the system processes the data of each modality using a respective tokenizer for the modality to generate tokens representing the data of the modality.

For example, for one or more of the modalities, the tokenizer of the modality can be an encoder neural network that is configured to process data of the modality to generate one or more tokens that represent the data of the modality. Examples of encoder neural networks include convolutional neural networks or vision Transformers for camera data, convolutional neural networks and Transformer neural networks for lidar data, convolutional neural networks and Transformer neural networks for radar data, convolutional neural networks, recurrent neural networks, and Transformer neural networks for audio data, recurrent neural networks and Transformer neural networks for text data and comms data, and so on.

As another example, for one or more of the modalities, the tokenizer of the modality can translate the data of the modality as a text string and then apply a fixed tokenizer, e.g., byte pair encoding (BPE) or SentencePiece, to the text to generate one or more tokens for the modality.

Thus, as a result of this processing, the system generates an input sequence of tokens characterizing the driving environment for the vehicle. The input sequence of tokens includes, for each of one or more time steps, a respective set of tokens for each of a plurality of modalities of data from a set of multiple modalities of data.

The data corresponding to a given time step will generally be referred to as a "frame" of data.

The system can determine what constitutes a time step in any of a variety of ways.

For example, the system can determine that each time step is a fixed window of time, so that the data in each frame is data that is received or generated within the fixed window of time.

As another example, the system can determine that each time step ends whenever a significant set of new data becomes available across modalities. For example, a "significant" set of new data can be data from a particular type of sensor or data from at least a threshold number of the sensors of the autonomous vehicle. Thus, the data in each frame is data that is received or generated between two consecutive times that a significant set of new data becomes available.

The system then processes the input sequence of tokens using the multi-modal token processing neural network 130 to generate an output sequence of output tokens 230. The output sequence of output tokens 230 includes, for each of multiple modalities, tokens belonging to the modality for each of one or more time steps. The set of output modalities can include the same modalities as the input data 210 or can be a different set of modalities, e.g., a superset or subset of the modalities.

In the example 200, the output tokens 230 include, for each of one or more time steps that follow the last time step in the input sequence, camera tokens representing one or more images at the time step, lidar tokens representing lidar data at the time step, radar tokens representing radar data at the time step, onboard map tokens representing map data at the time step, comms tokens representing comms data at the time step, and audio data representing audio data at the time step. Thus, the same neural network 130 generates both comms tokens and sensor tokens representing sensor data, e.g., camera tokens, lidar tokens, and audio tokens.

The map data at the time step can be, e.g., a rendered map of the driving environment in the vicinity of the vehicle at the time step. For example, the map can be a map of the road features in the vicinity of the vehicle from a top-down perspective, e.g., centered at the location of the autonomous vehicle at the corresponding time step at the time step.

For example, the neural network 130 can be an auto-regressive generative model (e.g., a Transformer neural network, a recurrent neural network, etc.) configured to process the input token sequence to auto-regressively generate the output token sequence.

A Transformer neural network is a neural network including a stack of Transformer blocks, each typically including an attention or self-attention neural network layer configured to perform a respective attention operation (e.g., using an attention mask, such as an auto-regressive attention mask), generally followed by a feedforward neural network layer.

As a further example, the neural network 130 can be a multi-modal language model configured to process tokenized representations of input data for multiple data modalities (e.g., input text data, input image data, etc.) to generate tokenized representations of output data for one or more data modalities (e.g., output text data, output image data, etc.). Example architectures of multi-modal language models are described by the Gemini Team et al. in "Gemini: A Family of Highly Capable Multimodal Models" arXiv preprint arXiv:2312.11805 (2023), the Gemini Team et al. in "Gemini 1.5: Unlocking Multimodal Understanding Across Millions of Tokens of Context" arXiv preprint arXiv:2403.05530 (2024*),* and the Gemma Team et al. in. "Gemma: Open Models Based on Gemini Research and Technology" arXiv preprint arXiv:2403.08295 (2024*).*

In general, the neural network 130 can be configured to auto-regressively generate output tokens of the output token sequence over a sequence of auto-regressive iterations. At each auto-regressive iteration, the neural network 130 can process the input token sequence and the output token sequence (as of the current auto-regressive iteration) to determine a probability distribution over a token vocabulary of the neural network 130 or to generate a continuous token. When generating the probability distribution, the neural network 130 can select the output token for the auto-regressive iteration using the probability distribution, e.g., by sampling the output token in accordance with the probability distribution, by selecting a highest-probability output token, and so on. Thus, each token in the output sequence is generated conditioned on the tokens that have already been generated in the output sequence and the tokens in the input sequence.

In some implementations, the system can leverage the auto-regressive nature of the generation to improve the quality of the generated tokens. For example, for each frame, the neural network 130 can output tokens representing independent features first and then progressively generate output tokens representing output features that depend on the previously decoded tokens. For example, for any given time step, the neural network 130 can first generate comms tokens and then generate sensor tokens for the time step conditioned on the comms tokens for the time step. This is because the scene as depicted in sensor readings depends on the positions and dynamic properties of agents in the environment, which are defined by the comms tokens. As another example, the neural network 130 can first, for a given agent, generate comms tokens that represent the location of the agent and then generate, conditioned on these generated tokens, higher order kinematic tokens that represent other motion parameters of the agent, e.g., one or more of heading, velocity, or acceleration of the agent.

As a particular example, the neural network 130 can first decode agent kinematic tokens, starting with X, Y and then decode higher order kinematics that need to be consistent with the simpler X Y fields. Next, the neural network 130 can decode agent attributes, e.g., turn signal state, that may have strong causality on agent kinematics. Finally, the neural network 130 can decode the sensor tokens that should be consistent with the semantics (perception output) that were already decoded.

The system can then process, for one or more of the output modalities, the output tokens 230 of the modality for one or more of the time steps using a respective detokenizer 240 of the modality to generate output data 250 of the modality.

For example, as shown in the example 200, the system can generate simulated fields that include one or more of: camera images, lidar point clouds, radar returns, or output data that reflects the data represented by the onboard map tokens, the comms tokens, or both. This output data can be, e.g., heatmaps, contours, and so on showing the positions and optionally other properties of objects, road features, or both in the environment.

In some implementations, the de-tokenizer for a given modality can be a fixed mapping between tokens of the given modality and data of the given modality.

In some implementations, the de-tokenizer for one or more modalities can be a generative model, e.g., a generative neural network, that generates data of the given modality from output tokens for the given modality.

For example, for one or more of the modalities, the generative model can be a diffusion model that performs a denoising process to generate the data for the given modality from the tokens of the given modality. A diffusion model initializes a representation of a data item, e.g., by sampling the representation from a noise distribution, e.g., a Gaussian distribution, and then uses a denoising neural network to perform an iterative denoising process to generate an updated representation of the data item that removes noise from the initial representation. The iterative denoising process can be any appropriate denoising process, e.g., a reverse diffusion process, a flow matching process, a multi-step consistency process, and so on. As a particular example, the representation can be in a latent space and the diffusion model can then generate the final data item by processing the updated latent representation using a decoder neural network.

For example, in the example 200, the de-tokenizer for the sensor data modalities is a diffusion model. That is, the camera tokens, the lidar tokens, and the radar tokens are jointly processed by a diffusion model to generate the corresponding camera, lidar, and radar data. In other examples, each different type of sensor data can be processed by a separate diffusion model to generate the sensor data for that type. Similarly, the de-tokenizer for the comms data tokens and the onboard map tokens is a different diffusion model.

As another example, for one or more of the modalities, the generative model can be a different type of neural network, e.g., a decoder neural network that has been trained as part of an auto-encoder framework with a corresponding encoder neural network.

While the example 200 shows the neural network 130 processing different tokens representing different types of sensor data as part of the input sequence, in other examples, the neural network 130 processes sensor tokens that represent a "fused" representation of multiple different types of sensor data. For example, the neural network 130 can process a single set of sensor tokens that represents two or more of camera data, lidar data, or radar data captured at a given time step.

Similarly, while the example 200 shows the neural network 130 generating different tokens representing different types of sensor data as part of the output sequence, in other examples, the neural network 130 generates sensor tokens that represent a "fused" representation of multiple different types of sensor data. For example, the neural network 130 can generate a single set of sensor tokens that represents two or more of camera data, lidar data, or radar data at a given time step.

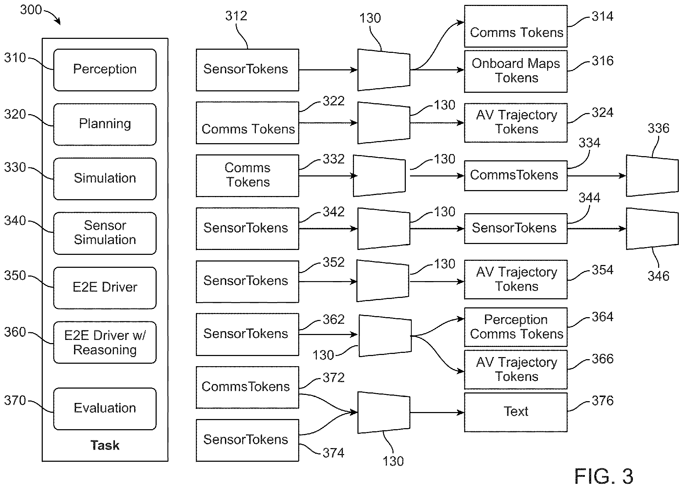

FIG. 3 shows an example 300 of tasks that can be performed by the multi-modal token processing neural network 130.

Generally, depending on the implementation, the system can use the multi-modal token processing neural network 130 to perform two or more of the tasks shown in the example 300. That is, in some cases, the system can use the multi-modal token processing neural network 130 to perform all of the tasks shown in the example 300 while, in other cases, the system performs a subset of two or more of the tasks.

For example, the tasks can include perception tasks 310. For a perception task, the input to the neural network 130 includes sensor tokens 312 and the output of the neural network 130 can include comms tokens 314, onboard maps tokens 316, or both. Thus, the perception task requires the neural network 130 to process tokens representing sensor data, e.g., one or more of camera, lidar, or radar data, to generate an output that characterizes dynamic objects, e.g., vehicles, cyclists, pedestrians, or other agents, in the environment, e.g., that outputs the positions, higher-order kinematics, classes or other properties of objects in the environment, that characterizes map features in the environment, e.g., roadways, driving lanes, traffic signals, street signs, and so on. Thus, in this example, the system uses the neural network 130 to perform a task that would otherwise need to be performed by a specialized computer vision model.

In more detail, the perception task is to consume the sensor tokens and output the comms fields that are the outputs of on-board perception models. In some cases, along with these perception comms, the task also produces onboard maps. This system effectively distills the current onboard perception module that produced the sensor to comms mapping that is in the logs used for training into the neural network 130.

Another example of a perception task is an off-board / oracle perception task that aims to improve on an existing perception output. The input for this task includes:
Sensor Tokens: The complete sequence of sensor tokens for a complete run segment being evaluated.

Initial Comms: The comms data generated by the onboard perception system or other perception system. This provides a strong initial estimate of the scene.

The output is a sequence of enhanced comms fields. These represent a refined and corrected version of the initial comms, incorporating information from the entire segment. This could include:
Corrected Bounding Boxes: Adjusting the position, size, or orientation of bounding boxes based on observations later in the segment.
Improved Tracking: Resolving ambiguities in object tracking, such as occlusions or identity swaps, by leveraging the full temporal context.
Refined Classifications: Correcting misclassifications based on subsequent behavior (e.g., a stationary object initially classified as a "parked car" is later observed to move, and is reclassified as a "stopped vehicle").
Added/Removed Objects: Inserting objects that were initially missed or removing false positives based on the broader context.
Mitigation of Sensor Noise: By leveraging information across the entire segment, oracle perception can mitigate the effects of transient sensor noise or temporary occlusions that might mislead the real-time onboard system.

The outputs for this task can then be used for any of a variety of purposes, e.g., for training an improved perception system, for evaluating a perception system, or for generating training data for another model.

As another example, the tasks can include planning tasks 320. For a planning task, the input to the neural network 130 includes perception comms tokens 322 and the output of the neural network 130 can include AV trajectory tokens 324 that specify a future trajectory for the autonomous vehicle. Thus, in this example, the system uses the neural network 130 to perform a task that would otherwise need to be performed by a specialized planning model.

As another example, the tasks can include simulation tasks 330.

For a simulation task, the input to the neural network 130 includes comms tokens 332 and the output of the neural network 130 can include comms tokens 334, i.e., comms tokens 334 that are predictions of outputs that would be generated by perception models at future time steps. Thus, in this example, the system uses the neural network 130 to perform a task that would otherwise need to be performed by a specialized simulation model or by a hard-coded simulation of the environment. Optionally, the system can then use a detokenizer 336 for the comms data modality to generate output comms data from the comms tokens 334. Thus, the simulation task requires generating data characterizing the state of the environment at the next time step from data characterizing the state of the environment at the current time step and, optionally, other data, e.g., a text prompt describing how the environment should change, sensor tokens representing sensor data, and so on.

As another example, the tasks can include sensor simulation tasks 340. For a sensor simulation task, the input to the neural network 130 includes sensor tokens 342 and the output of the neural network 130 can include sensor tokens 344, i.e., sensor tokens 344 that represent predicted sensor data generated at future time steps. Thus, in this example, the system uses the neural network 130 to perform a task that would otherwise need to be performed by a specialized simulation model or by a hard-coded simulation of the environment. Optionally, the system can then use a detokenizer 346 for the sensor data to generate the output sensor data. Thus, the simulation task requires generating sensor data characterizing the state of the environment at the next time step from sensor data characterizing the state of the environment at the current time step and, optionally, other data, e.g., a text prompt describing how the environment should change, comms data tokens characterizing agents in the environment, and so on.

As another example, the tasks can include end-to-end (E2E) driving tasks 350. For an E2E driving task, the input to the neural network 130 includes sensor tokens 352 and the output of the neural network 130 can include AV trajectory tokens 354 that specify a future trajectory for the autonomous vehicle. Thus, in this example, the system uses the neural network 130 to perform a task that would otherwise need to be performed by a specialized planning model in combination with a set of perception models that would process sensor data to generate inputs to the planning model.

As another example, the tasks can include end-to-end (E2E) driving with reasoning tasks 360. For an E2E driving with reasoning task, the input to the neural network 130 includes sensor tokens 362 and the output of the neural network 130 can include AV trajectory tokens 366 that specify a future trajectory for the autonomous vehicle and perception comms tokens 364. Thus, the output provides a reasoning for the future trajectory in the form of predicted motion of agents and other objects in the environment. Thus, in this example, the system uses the neural network 130 to perform a task that would otherwise need to be performed by a specialized planning model in combination with a set of perception models that would process sensor data to generate inputs to the planning model and a set of behavior prediction models that predict future motion of objects in the environment.

As another example, the tasks can include an evaluation task 370. Evaluation tasks require analysis of a scene, either a real-world scene or a simulated scene, to determine if certain events occurred (or will occur under re-simulations). For an evaluation task, the input to the neural network 130 includes sensor tokens 374, comms tokens 372, or both and the output of the neural network 130 can include text tokens 366. For example, the text tokens 366 can specify whether certain types of events occurred during the time period captured by the sensor tokens 374, comms tokens 372, or both. Examples of these events include traffic law or regulation violations, specified types of driving maneuvers, specified actions by other agents in the environment, and so on.

As can be seen from the above, different types of tasks receive different types of tokens as input and generate different types of tokens as output. To account for this, i.e., to allow the same neural network 130 to process different types of tokens and generate different types of tokens for different inputs and different tasks, the system can, for example, provide the configuration for the current inputs and outputs as an instruction prompts prefix, e.g., through natural language text or as system tokens, before the actual input data stream. That is, the system can include, in any given input sequence to the neural network 130, a set of tokens that specify the modalities of the input tokens that are included in the input sequence and the modalities of the output tokens that are required to be included in the output sequence. Thus, different tasks can have different configurations and the input for any given task can include tokens that specify the configuration for the task.

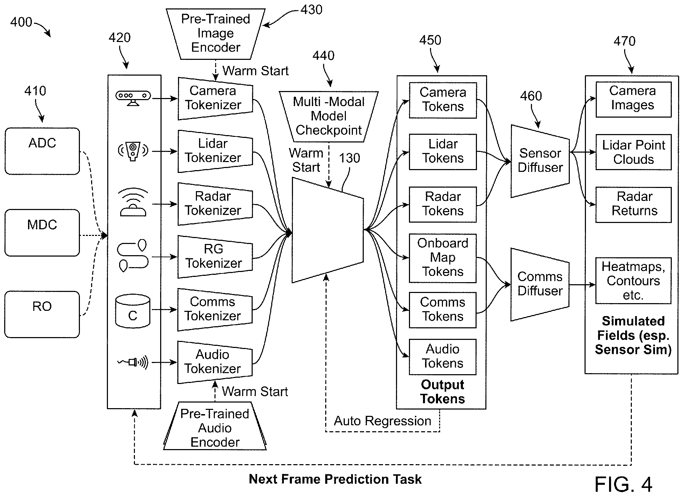

FIG. 4 shows an example 400 of the training of the neural network 130. In particular, the example 400 shows an example of how the neural network 130 can be "pre-trained" on a task that requires predicting states of example driving environments.

More specifically, a training system trains the neural network 130 on training sequences 420 from one or more data sources 410. The one or more data sources 410 can include data from autonomous vehicles, human driven vehicles, remotely-operated vehicles, or some combination of the above.

That is, the system can generate training sequences from log data from the one or more data sources 410. To account for different training sequences having different types of sensor data, the system can annotate each training sequence with a prompt that specifies the configuration of the training sequence, i.e., with a prompt that identifies the types of sensor data included in the training sequence, as described above.

In some cases, some or all of the encoder neural networks 430 have been pre-trained prior to the training of the neural network 130. For example, the example 400 shows that the audio encoder neural network and the camera encoder neural network have been pre-trained. For example, one or more of the encoder neural networks can be pre-trained on data from the log data, from general purpose data of the corresponding modality, and so on.

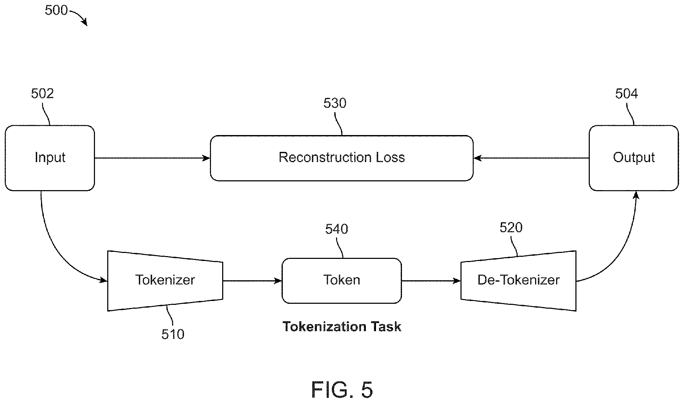

An example of this pre-training is described below with reference to FIG. 5.

The system can then train the neural network 130 on a next frame prediction task. The next frame prediction task measures the performance of the neural network 130 in accurately predicting the next frame of data in a training input sequence by processing the tokens for the preceding frames of data in the training input sequence.

In some cases, the system performs the training in the token space, e.g., on an objective that measures the accuracy of tokens generated by the neural network 130 for the next frame and actual tokens for the next frame generated by encoding the data corresponding to the next frame using the tokenizers. In this case, the objective can be any appropriate next token prediction objective that measures the performance of the neural network 130 in accurately predicting the next token in the training input sequence by processing the preceding tokens in the training input sequence. For example, when the next token is a discrete token, the objective can measure a likelihood assigned to the discrete token by the neural network 130 by processing the preceding tokens in the training input sequence. This can be a cross entropy objective, a negative log likelihood objective, or any other appropriate objective. When the next token is a continuous token, the objective can measure a difference, e.g., an L2 distance, a mean squared error, or other difference, between the next token and the token predicted by the neural network 130 by processing the preceding tokens in the input sequence.

In some other cases, the system performs the training in the output space, e.g., on an objective that measures errors between predicted data for the next frame and actual data for the next frame. That is, for this training, the system trains the neural network 130 based on outputs generated by the detokenizers by processing tokens generated by the neural network 130 and corresponding target outputs for the outputs of the detokenizers. For example, this objective can be a reconstruction objective, a diffusion model objective, a flow matching objective, and so on.

In some of these cases, the system can train the tokenizers, the de-tokenizers, or both as part of this training.

In some of these cases, when the neural network 130 generates both discrete and continuous tokens, the system can use a token space objective for discrete tokens and an output space objective for continuous tokens.

In yet other cases, the system can alternate between performing training iterations in the token space and training iterations in the output space.

In yet other cases, the system can first train in the output space and then fix the tokenizers and the de-tokenizers and then train in the token space.

More generally, because the system trains the neural network on a next frame prediction task that requires predicting both multi-modal sensor tokens as well as comms tokens for the next frame given the tokens for the current frame, the next frame prediction training trains the neural network 130 to serve as a "world model" that has learned a rich representation of the driving environment that captures the dynamics of the driving environment and the dependencies between different types of data within the environment.

FIG. 5 shows an example 500 of the training of a tokenizer 510 and a de-tokenizer 520 for a given modality. The tokenizer 510 and de-tokenizer 520 can be configured to process and generate, respectively, any given one of the modalities of data described above.

As shown in the example 500, the tokenizer 510 and the de-tokenizer 520 are trained on a reconstruction loss 530.

In particular, the reconstruction loss 530 measures an error between an input 502 of the given modality and an output 504 of the given modality. The output of the given modality is generated by processing the input 502 using the tokenizer 510 to generate a set of one or more tokens 540 representing the input 502 and then processing the one or more tokens 540 using the de-tokenizer 520 to generate the output 504.

In some cases, instead of reconstructing the current frame, the system tasks the decoder, i.e., the detokenizer, with reconstructing the next frame from the current token sequence. In other words, in some cases, for some or all of the training, the input 502 is the input from a current frame, but the reconstruction loss 530 measures an error between the output 504 and the corresponding modality of data from the subsequent frame. By directly reconstructing the next frame, the model is forced to learn a tokenization that encodes information relevant to the future state. This aligns the objectives of tokenization and prediction, as the decoder is trained to extract information useful for anticipating the next frame. This can couple the prediction and reconstruction processes, encouraging a tokenization that prioritizes predictive information.

Generally, the tokenizer 510 and the de-tokenizer 520 are trained on the reconstruction loss 530 prior to the training of the multi-modal token generation neural network 130. In some cases, the tokenizer 510 and the de-tokenizer 520 can then be held fixed during the training multi-modal token generation neural network 130.

In some other cases, the tokenizer 510, the de-tokenizer 520, or both can be fine-tuned during the training of the multi-modal token generation neural network 130. For example, the system can jointly learn the tokenization and prediction by backpropagating through the tokenizers during the next frame prediction training. As another example, the de-tokenizer 520 can be trained jointly with the neural network 130 when the system makes use of an output space objective during training. By jointly learning the tokenization and prediction models, the system enables the tokenization to adapt to the needs of the predictor. This creates a feedback loop where the predictor guides the tokenization to focus on features that are important for prediction, and the tokenization provides the predictor with a more suitable representation. This enables the model to dynamically adjust the level of compression based on the predictive requirements of the task.

In any of the above training regimes, the system can optionally include a regularization term that encourages tokens useful for prediction, based on mutual information between successive frames. This regularization term explicitly encourages the tokenization to encode information that is predictive of the next frame. For example, this objective can measure the mutual information between the tokens for the current frame and the tokens for the next frame. By maximizing the mutual information between the tokens and the next frame, the system can ensure that the tokens retain information relevant for predicting future states. This can guide tokenization toward more predictive representation.

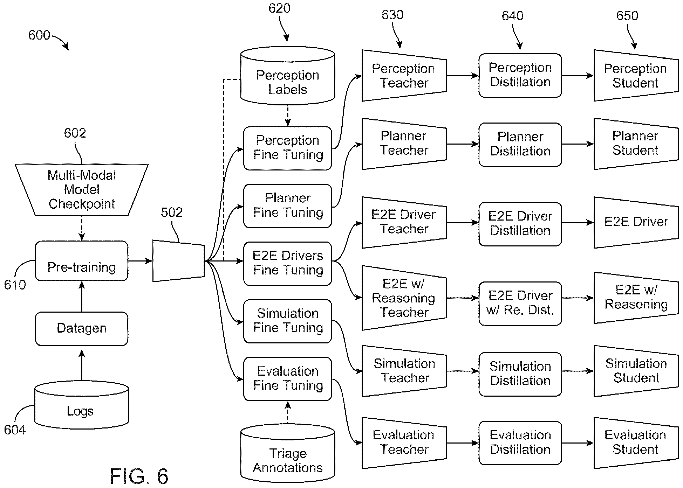

FIG. 6 shows an example 600 of the training pipeline for the multi-modal token processing neural network 130. In particular, the example 600 shows how the multi-modal token processing neural network 130 can be used to generate multiple task-specific neural networks for multiple different tasks, i.e., to generate multiple versions of the multi-modal token processing neural network 130 that are each adapted to perform a respective prediction task.

As shown in the example 600, a training system can train the multi-modal token processing neural network 130 in stages. In the example 600, the stages include a pre-training stage, a fine-tuning stage, and a distillation stage.

In the example 600, in the pre-training stage, the system pre-trains the multi-modal token processing neural network 130 starting from a pre-trained multi-modal checkpoint, e.g., from a pre-trained, general-purpose multi-modal token neural network, e.g., a multi-modal large language model (MMLLM) neural network that has been trained through unsupervised learning on general-purpose multi-modal data. For example the MMLLM can be a Gemma or Gemini model as described above. That is, the system can train the neural network 130 starting from a pre-trained checkpoint of one of these models. In other examples, the system pre-trains the multi-modal token processing neural network 130 from scratch, e.g., from randomly initialized parameter values.

For example, the system can pre-train the neural network 130 on the next frame prediction task described above.

The system then obtains respective training data 620 for each of multiple prediction tasks. For example, as shown in the example 600, the system obtains perception labels for a perception task and triage annotations for an evaluation task.

The training data 620 for a given prediction task generally includes training examples that each include an input sequence of tokens for the prediction task and an output sequence of tokens for the prediction task. Examples of input tokens and output tokens for various prediction tasks are provided above with reference to FIG. 3.

In some cases, the training examples for a given task also include other types of tokens that are not necessary for the prediction task, e.g., to provide additional context for the neural network 130 when making predictions.

For each task, the system then trains a version of the neural network 130 on the training data for the prediction task to generate a fine-tuned neural network 630 for the prediction task. The fine-tuned neural networks 630 are referred to as teacher neural networks in the example 600.

For example, the system can train the neural network 130 on the training data for the prediction task using an objective in the token space while holding the tokenizers and de-tokenizers fixed. As a particular example, the system can train the neural network 130 on the training data using a supervised fine-tuning objective. As another particular example, the system can train the neural network 130 on the training data using a reinforcement learning objective. As yet another particular example, after performing supervised fine-tuning, the system can train the neural network 130 on a closed-loop reinforcement learning objective, e.g., in a simulated driving environment.

When the training examples for a given task also include other types of tokens that are not necessary for the prediction task, e.g., the system can weight the loss for the objective task to place additional weight on the tokens that are required to be predicted for the additional task. For example, the system can mask out tokens that are not required to be predicted from the loss. As another example, the system can assign, in the loss, tokens that are not required to be predicted a non-zero weight that is lower than the weight assigned to tokens that are required to be predicted.

In some cases, the system then uses the fine-tuned neural network 630 to perform the corresponding task.

In some other cases, performing the task requires a neural network that consumes less memory or that incurs a smaller latency when performing the task.

In these cases, the system can perform a distillation training technique 640 that uses the fine-tuned neural network 630 as a teacher to train a smaller, lower-latency, or both student neural network 650. That is, during this training process, the system uses outputs generated by the fine-tuned neural network 630 as target outputs for the training of the corresponding student neural network 650. For example, the student neural network 650 can be more computationally efficient because the neural network has fewer parameters than the teacher neural network, e.g., as a result of having fewer layers, fewer attention heads per layer, or having a smaller model dimension.

In more detail, the goal of distillation is to train a smaller, less parameterized model (the student) to approximate the function learned by a larger, highly parameterized model (the teacher).

Instead of training the student solely on ground truth labels, the distillation training uses the teacher's output distributions, intermediate states, or generated sequences as supervisory signals. This provides a richer gradient signal and helps the student model converge on a more optimal model than training from scratch.

As one example, the system can use logit-based distillation, which minimizes the difference between the output probability distributions of the teacher and the student.

As another example, the system can use feature-based distillation, which trains the student to replicate the intermediate representations (hidden states or attention matrices) of the teacher.

As another example, the system can use black-box distillation, which uses the teacher to generate ground truth sequences and then trains the student on the ground truth output sequences generated by the teacher.

Optionally, after performing distillation, the system can further train the student, e.g., using next-frame prediction, supervised fine-tuning, reinforcement learning or some combination.

Thus, by performing the training pipeline depicted in FIG. 6, the system can effectively transform a single neural network 130 into multiple task specific neural networks that each leverage world knowledge learned by the neural network 130 to improve the performance of the neural network on the corresponding prediction task.

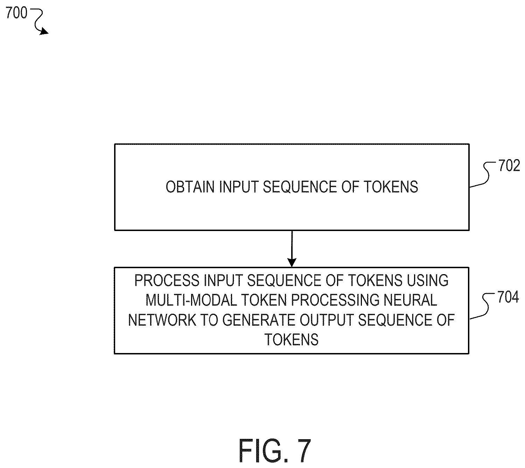

FIG. 7 is a flow diagram of an example process 700 for performing a task using the multi-modal token processing neural network. For convenience, the process 700 will be described as being performed by a system of one or more computers located in one or more locations. For example, an on-board system, e.g., the on-board system 110 depicted in FIG. 1, appropriately programmed in accordance with this specification, can perform the process 700.

The system obtains an input sequence of tokens characterizing a driving environment for a vehicle (step 702). As described above, the input sequence of tokens includes, for each of one or more time steps, a respective set of tokens for each of a plurality of modalities of data from a set of multiple modalities of data.

The system processes the input sequence of tokens using a multi-modal token processing neural network to generate an output sequence of tokens (step 704). As described above, the output sequence of tokens characterizes a prediction for a prediction task for the vehicle.

As part of performing this processing, the system auto-regressively generates an output sequence of tokens for the prediction task using the multi-modal token processing neural network. For example, the tokens for each time step can include multiple different modalities of tokens, e.g., comms tokens followed by sensor tokens. Examples of tokens that are included in output sequences for various prediction tasks are described above with reference to FIG. 3.

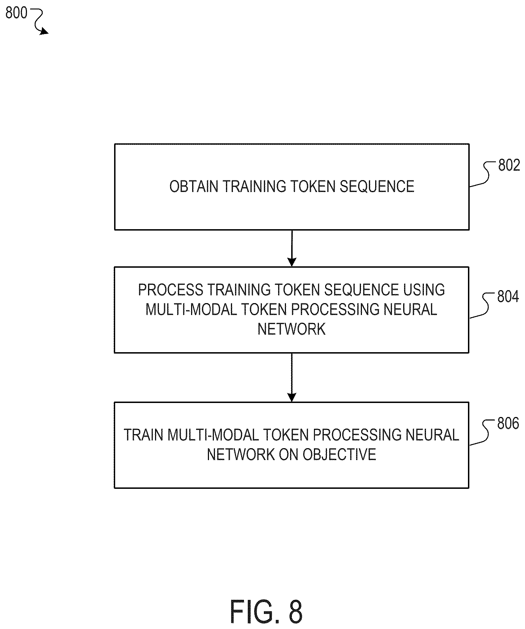

FIG. 8 is a flow diagram of an example process 800 for training the multi-modal token processing neural network. For convenience, the process 800 will be described as being performed by a system of one or more computers located in one or more locations. For example, an off-board system, e.g., the off-board system 130 depicted in FIG. 1, appropriately programmed in accordance with this specification, can perform the process 800.

The system obtains a training token sequence characterizing states of an example driving environment (step 802). That is, the training token sequence includes, for each of multiple time steps, a respective set of tokens characterizing the state of the example driving environment at the time step.

The system processes the training token sequence using the multi-modal token processing neural network to generate a training output (step 804).

The system trains the multi-modal token processing neural network on an objective using the training output (step 806).

For example, the system can train the multi-modal token processing neural network on a current state reconstruction objective, a next frame prediction objective, or a combination of both as described above. In the current state reconstruction objective, the system trains the neural network to reconstruct the data represented by the input sequence, e.g., to generate, by processing the current sequence of tokens for the current frame, a reconstruction of the tokens corresponding to the current frame or to generate, by processing the current sequence of tokens for the current frame, a reconstruction of the multi-modal data represented by the tokens corresponding to the current frame. In some implementations, the system can train the tokenizers, detokenizers, or both when performing current state reconstruction.

As a particular example, the system can use a next frame prediction for all iterations of the process 800 performed during pre-training.

As another example, the system can first pre-train the neural network on the current state reconstruction objective and then, after training the neural network on the current state reconstruction objective, the system can pre-train the neural network on the next frame prediction objective. This can allow the neural network to learn an initial tokenization and representation of the environment which can then be adapted for next-frame prediction.

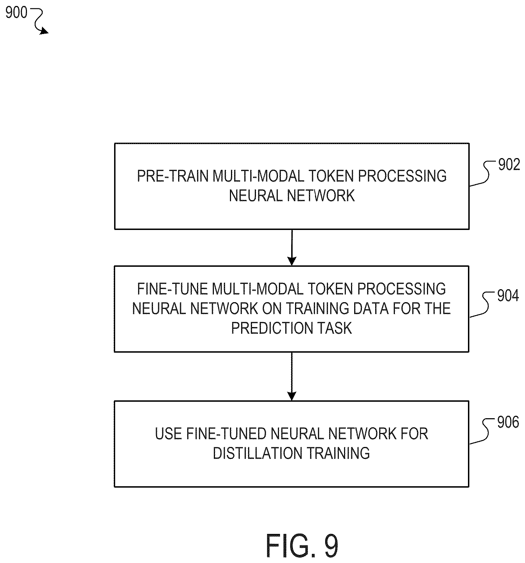

FIG. 9 is a flow diagram of an example process 900 for training the multi-modal token processing neural network to perform a prediction task. FIG. 9 is a flow diagram of an example process 900 for training the multi-modal token processing neural network. For convenience, the process 900 will be described as being performed by a system of one or more computers located in one or more locations. For example, an off-board system, e.g., the off-board system 130 depicted in FIG. 1, appropriately programmed in accordance with this specification, can perform the process 900.

The system pre-trains the multi-modal token processing neural network (step 902). For example, the system can pre-train the multi-modal token processing neural network on a current state reconstruction objective, a next frame prediction objective, or a combination of both as described above.

The system fine-tunes the multi-modal token processing neural network on training data for the prediction task (step 904). For example, the system can perform this further training as described above. In some implementations, the system then uses the fine-tuned multi-modal token processing neural network to perform the prediction task. In some other implementations, e.g., when a smaller, low-latency neural network is required, the system can perform further training.

In these implementations, the system uses the fine-tuned multi-modal token processing neural network to perform distillation training of a student multi-modal token processing neural network (step 906). For example, the system can perform this distillation training as described above.

The system can then use the student multi-modal token processing neural network to perform the prediction task.

In some cases, the system can perform some or a portion of the training of the neural network 130 in a federated manner, with each of multiple autonomous vehicles generating training data and transmitting gradients to a training system, which can then determine parameter updates and communicate the parameter updates to the autonomous vehicles.

For example, centralized training of the neural network 130 can face a bottleneck due to the large volume of sensor data required to effectively train the neural network 130. To account for this, the system can use a framework where each autonomous vehicle performs local gradient computations using its own sensor data during normal operation, mitigating the need to transfer large quantities of raw data to central servers. By utilizing on-board compute resources for real-time next-frame prediction and loss calculation, this technique distributes the training workload across autonomous vehicles.

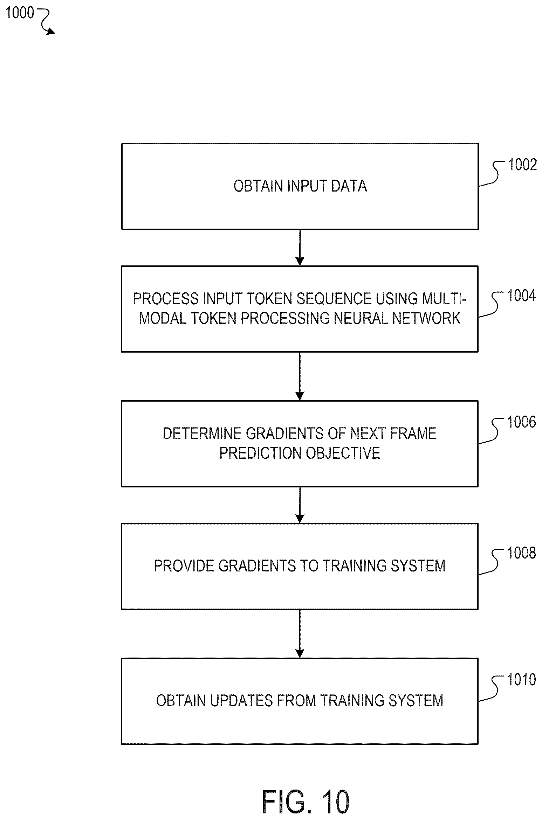

FIG. 10 is a flow diagram of an example process 1000 for on-device training of the multi-modal token processing neural network.

In particular, the process 1000 can be repeatedly performed asynchronously by each of multiple different autonomous vehicles, e.g., by respective on-board systems 110 of each of the autonomous vehicles 102, to train the multi-modal token processing neural network.

The system obtains input data for the multi-modal processing neural network (step 1002).

The system processes an input token sequence generated from the input data using the multi-modal processing neural network to predict the next state of the driving environment (step 1004). For example, the system can do this as part of performing one or more of the above prediction tasks during the course of operation of the autonomous vehicle.

The system determines gradients of a next frame prediction objective (step 1006). In particular, for any given frame, the system obtains the ground truth next frame as part of the operation of the autonomous vehicle, e.g., because the next frame of sensor data becomes available once captured by the sensors of the autonomous vehicle. Because the system has already computed the forward pass through the neural network as part of the operation of the vehicle, the system only needs to perform a backward pass in order to compute the gradients of the objective. The system can then determine gradients of one of the next frame prediction objectives described above with respect to the parameters of the multi-modal language model neural network using the output of the forward pass and the ground truth next frame.

The system provides the gradients to a training system, e.g., to the off-board system described above (step 1008). The training system can then perform an update to the parameters of the neural network using a federated learning technique, e.g., federated averaging or another appropriate federated learning algorithm, using gradients received from the autonomous vehicles.

To maximize data efficiency and computational throughput, the system can employ a mini-batch approach for on-device training. Over a time interval, e.g., over a specified window of time while the autonomous vehicle is operating, the system can compute prediction losses, e.g., next frame prediction losses, sequentially for each time step. The system can accumulate the gradients for these individual examples in a mini-batch before sending the gradients to the training system.

In some implementations, to further enhance data reuse, the system can make use of a circular buffer mechanism. This buffer stores recent sensor data and intermediate model states, enabling the construction of overlapping consecutive next-frame prediction examples and efficient gradient computation and accumulation.

The system obtains, from the training system, data defining updates to the parameters of the multi-modal processing neural network (step 1010). For example, the data can be updated parameter values or delta values that the system adds to the current parameter value to generate the updated parameter values.

By repeatedly performing this process across multiple autonomous vehicles, e.g., instead of or in combination with centralized training at the training system, the system can train the neural network in a distributed and computationally efficient manner.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Innovative aspects of the present disclosure are also set out in the following set of numbered clauses.

Clause 1. A method performed by one or more computers, comprising:
obtaining an input sequence of tokens characterizing a driving environment for a vehicle, wherein the input sequence of tokens comprises, for each of one or more time steps, a respective set of tokens for each of a plurality of modalities of data from a set of multiple modalities of data; and
processing the input sequence of tokens using a multi-modal token processing neural network to generate an output sequence of tokens, wherein:
   the output sequence of tokens characterizes a prediction for a prediction task for the vehicle, and
   the multi-modal token processing neural network has been trained to process input token sequences characterizing current states of example driving environments to generate output token sequences characterizing predicted future states of the example driving environments.

Clause 2. The method of clause 1, wherein:
the output token sequences characterizing the predicted future states of the example driving environments each comprise a respective set of tokens for each modality of data from the set of multiple modalities of data.

Clause 3. The method of any preceding clause, wherein training the multi-modal token processing neural network comprises:
training the multi-modal token processing neural network to optimize an objective function that measures an error between (i) the predicted future states of the example driving environments characterized by the output token sequences and (ii) corresponding target future states of the example driving environments.

Clause 4. The method of any preceding clause, wherein training the multi-modal token processing neural network comprises:
training the multi-modal token processing neural network to optimize an objective function that measures an error between (i) the current states of the example driving environments characterized by the input token sequences and (ii) reconstructions of the current states generated by processing the corresponding output token sequences generated by the multi-modal token processing neural network.

Clause 5. The method of any preceding clause, wherein training the multi-modal token processing neural network comprises:
training the multi-modal token processing neural network to optimize an objective function that measures a mutual information between the current states of the example driving environments and the corresponding predicted future states of the example driving environments.

Clause 6. The method of any preceding clause, wherein the set of multiple modalities of data includes a video data modality.

Clause 7. The method of any preceding clause, wherein the set of multiple modalities of data includes an image data modality.

Clause 8. The method of any preceding clause, wherein the set of multiple modalities of data includes an audio data modality.

Clause 9. The method of any preceding clause, wherein the set of multiple modalities of data includes a LIDAR data modality.

Clause 10. The method of any preceding clause, wherein the set of multiple modalities of data includes a RADAR data modality.

Clause 11. The method of any preceding clause, wherein the set of multiple modalities of data includes a road graph data modality.

Clause 12. The method of any preceding clause, wherein the set of multiple modalities of data includes structured data generated by processing sensor data obtained by one or more sensors of the vehicle using a perception system of the vehicle.

Clause 13. The method of any preceding clause, wherein training the multi-modal token processing neural network comprises, after training the multi-modal token processing neural network to process the input token sequences characterizing current states of the example driving environments to generate the output token sequences characterizing predicted future states of the example driving environments:
training the multi-modal token processing neural network using an objective function for the prediction task for the vehicle.

Clause 14. The method of any preceding clause, wherein the prediction task for the vehicle comprises:
processing sensor data obtained by one or more sensors of the vehicle to generate output data characterizing one or more detected objects in the driving environment of the vehicle.

Clause 15. The method of any preceding clause, wherein the prediction task for the vehicle comprises:
generating a predicted trajectory for each of one or more agents or vehicles in the driving environment of the vehicle.

Clause 16. The method of any preceding clause, wherein the prediction task for the vehicle comprises:
generating a planned trajectory for the vehicle through the driving environment of the vehicle.

Clause 17. The method of any preceding clause, wherein the prediction task for the vehicle comprises:
generating one or more planned control inputs for the vehicle.

Clause 18. The method of any preceding clause, wherein the prediction task for the vehicle comprises:
generating structured input data for one or more processing systems of the vehicle.

Clause 19. The method of any preceding clause, wherein the prediction task for the vehicle comprises:
generating a text description characterizing the driving environment of the vehicle.

Clause 20. The method of any preceding clause, wherein obtaining the input sequence of tokens characterizing the driving environment for the vehicle comprises, for each of the one or more time steps and for each of the plurality of modalities of data:
obtaining input data of the modality for the time step; and
processing the input data of the modality for the time step using an encoder neural network for the modality to generate the set of tokens for the modality for the time step.

Clause 21. The method of clause 20, wherein training the multi-modal token processing neural network to process the input token sequences characterizing current states of the example driving environments to generate the output token sequences characterizing predicted future states of the example driving environments comprises:
jointly training the multi-modal token processing neural network with encoder neural networks for one or more of the set of multiple data modalities.

Clause 22. The method of any preceding clause, further comprising, for each of one or more modalities of the set of multiple modalities of data:
processing some or all of the output token sequence using a decoder neural network for the modality to generate output data of the modality.

Clause 23. The method of clause 22, wherein, for each of the one or more modalities of the set of multiple modalities of data:
the output token sequence comprises a respective set of output tokens for the modality;
   and
processing some or all of the output token sequence using the decoder neural network for the modality to generate the output data of the modality comprises:
   processing the respective set of output tokens for the modality using the decoder neural network for the modality to generate the output data of the modality.

Clause 24. The method of any preceding clause, wherein the multi-modal token processing neural network has been trained using distillation.

Clause 25. The method of any preceding clause, further comprising:
training another neural network using an output generated as part of processing the input sequence of tokens using the multi-modal token processing neural network.

Clause 26. A system comprising one or more computers and one or more storage devices storing instructions that are operable, when executed by the one or more computers, to cause the one or more computers to perform the operations of the respective method of any preceding clause.

Clause 27. One or more computer-readable storage media encoded with instructions that, when executed by one or more computers, cause the one or more computers to perform the operations of the respective method of any preceding clause.

Innovative aspects of the present disclosure are also set out in the following additional set of numbered clauses.

Clause 1. A method performed by one or more computers, the method comprising:
pre-training a multi-modal token processing neural network on a next frame prediction task that requires processing input token sequences characterizing current states of example driving environments to generate output token sequences characterizing predicted future states of the example driving environments; and
after pre-training the multi-modal token processing neural network:
   obtaining respective training data for each of a plurality of prediction tasks for an autonomous vehicle; and
   for each of the plurality of prediction tasks, fine-tuning the multi-modal token processing neural network on the respective training data for the prediction task to generate a respective fine-tuned multi-modal token processing neural network for performing the prediction task.

Clause 2. The method of clause 1, further comprising, for one or more of the prediction tasks:
training a student multi-modal token processing neural network for the prediction task by performing distillation training using outputs of the respective fine-tuned multi-modal token processing neural network for performing the prediction task.

Clause 3. The method of clause 2, further comprising:
providing data specifying the student multi-modal token processing neural network to the autonomous vehicle for use in performing the prediction task.

Clause 4. The method of clause 1, wherein the pre-training comprises training the multi-modal token processing neural network to optimize an objective function that measures an error between (i) the predicted future states of the example driving environments characterized by the output token sequences and (ii) corresponding target future states of the example driving environments.

Clause 5. The method of any preceding clause, wherein the pre-training comprises:
training the multi-modal token processing neural network to optimize an objective function that measures an error between (i) the current states of the example driving environments characterized by the input token sequences and (ii) reconstructions of the current states generated by processing the corresponding output token sequences generated by the multi-modal token processing neural network.

Clause 6. The method of any preceding clause, wherein the pre-training comprises:
training the multi-modal token processing neural network to optimize an objective function that measures a mutual information between the current states of the example driving environments and the corresponding predicted future states of the example driving environments.

Clause 7. The method of any preceding clause, wherein the plurality of prediction tasks comprises:
a perception task that requires processing sensor data obtained by one or more sensors of the vehicle to generate output data characterizing one or more detected objects in the driving environment of the vehicle.

Clause 8. The method of any preceding clause, wherein the plurality of prediction tasks comprises:
a behavior prediction task that requires generating a predicted trajectory for each of one or more agents or vehicles in the driving environment of the vehicle.

Clause 9. The method of any preceding clause, wherein the plurality of prediction tasks comprises:
a planning task that requires generating a planned trajectory for the vehicle through the driving environment of the vehicle.

Clause 10. The method of any preceding clause, wherein the plurality of prediction tasks comprises:
a control task that requires generating one or more planned control inputs for the vehicle.

Clause 11. The method of any preceding clause, wherein the plurality of prediction tasks comprises:
a perception task that requires generating structured input data for one or more processing systems of the vehicle.

Clause 12. The method of any preceding clause, wherein the plurality of prediction tasks comprises:
an evaluation task that requires generating a text description characterizing the driving environment of the vehicle.

Clause 13. The method of any preceding clause, wherein the pre-training comprises:
jointly training the multi-modal token processing neural network with encoder neural networks for one or more of the set of multiple data modalities.

Clause 14. A system comprising one or more computers and one or more storage devices storing instructions that are operable, when executed by the one or more computers, to cause the one or more computers to perform the operations of the respective method of any preceding clause.

Clause 15. One or more computer-readable storage media encoded with instructions that, when executed by one or more computers, cause the one or more computers to perform the operations of the respective method of any preceding clause.

## Claims

1. A method performed by one or more computers, comprising:
obtaining an input sequence of tokens characterizing a driving environment for a vehicle, wherein the input sequence of tokens comprises, for each of one or more time steps, a respective set of tokens for each of a plurality of modalities of data from a set of multiple modalities of data; and
processing the input sequence of tokens using a multi-modal token processing neural network to generate an output sequence of tokens, wherein:
the output sequence of tokens characterizes a prediction for a prediction task for the vehicle, and
the multi-modal token processing neural network has been trained to process input token sequences characterizing current states of example driving environments to generate output token sequences characterizing predicted future states of the example driving environments.

2. The method of claim 1, wherein:
the output token sequences characterizing the predicted future states of the example driving environments each comprise a respective set of tokens for each modality of data from the set of multiple modalities of data.

3. The method of any preceding claim, wherein training the multi-modal token processing neural network comprises:
training the multi-modal token processing neural network to optimize an objective function that measures an error between (i) the predicted future states of the example driving environments **characterized by** the output token sequences and (ii) corresponding target future states of the example driving environments.

4. The method of any preceding claim, wherein training the multi-modal token processing neural network comprises:
training the multi-modal token processing neural network to optimize an objective function that measures an error between (i) the current states of the example driving environments **characterized by** the input token sequences and (ii) reconstructions of the current states generated by processing the corresponding output token sequences generated by the multi-modal token processing neural network.

5. The method of any preceding claim, wherein training the multi-modal token processing neural network comprises:
training the multi-modal language model neural network on a token space objective or on an output space objective.

6. The method of any preceding claim, wherein the set of multiple modalities of data includes:
a video data modality; and/or
an image data modality; and/or
an audio data modality; and/or
a LIDAR data modality; and/or
a RADAR data modality; and/or
a road graph data modality.

7. The method of any preceding claim, wherein the set of multiple modalities of data includes structured data generated by processing sensor data obtained by one or more sensors of the vehicle using a perception system of the vehicle.

8. The method of any preceding claim, wherein training the multi-modal token processing neural network comprises, after training the multi-modal token processing neural network to process the input token sequences characterizing current states of the example driving environments to generate the output token sequences characterizing predicted future states of the example driving environments:
training the multi-modal token processing neural network using an objective function for the prediction task for the vehicle.

9. The method of any preceding claim, wherein the prediction task for the vehicle comprises:
processing sensor data obtained by one or more sensors of the vehicle to generate output data characterizing one or more detected objects in the driving environment of the vehicle;
and/or
generating a predicted trajectory for each of one or more agents or vehicles in the driving environment of the vehicle; and/or
generating a planned trajectory for the vehicle through the driving environment of the vehicle; and/or
generating one or more planned control inputs for the vehicle; and/or
generating structured input data for one or more processing systems of the vehicle; and/or
generating a text description characterizing the driving environment of the vehicle.

10. The method of any preceding claim, wherein obtaining the input sequence of tokens characterizing the driving environment for the vehicle comprises, for each of the one or more time steps and for each of the plurality of modalities of data:
obtaining input data of the modality for the time step; and
processing the input data of the modality for the time step using an encoder neural network for the modality to generate the set of tokens for the modality for the time step,
optionally, wherein training the multi-modal token processing neural network to process the input token sequences characterizing current states of the example driving environments to generate the output token sequences characterizing predicted future states of the example driving environments comprises:
jointly training the multi-modal token processing neural network with encoder neural networks for one or more of the set of multiple data modalities..

11. The method of any preceding claim, further comprising, for each of one or more modalities of the set of multiple modalities of data:
processing some or all of the output token sequence using a decoder neural network for the modality to generate output data of the modality,
optionally, wherein, for each of the one or more modalities of the set of multiple modalities of data:
the output token sequence comprises a respective set of output tokens for the modality;
and
processing some or all of the output token sequence using the decoder neural network for the modality to generate the output data of the modality comprises:
processing the respective set of output tokens for the modality using the decoder neural network for the modality to generate the output data of the modality.

12. The method of any preceding claim, wherein the multi-modal token processing neural network has been trained using distillation.

13. The method of any preceding claim, further comprising:
training another neural network using an output generated as part of processing the input sequence of tokens using the multi-modal token processing neural network.

14. A system comprising one or more computers and one or more storage devices storing instructions that are operable, when executed by the one or more computers, to cause the one or more computers to perform the operations of the respective method of any preceding claim.

15. One or more computer-readable storage media encoded with instructions that, when executed by one or more computers, cause the one or more computers to perform the operations of the respective method of any preceding claim.
